# EUROPEAN PATENT SPECIFICATION

(11) **EP 3 877 334 B1**
(45) Date of publication and mention of the grant of the patent: **18.01.2023**
(21) Application number: 19798077.4
(22) Date of filing: 07.11.2019
(51) Int. Cl.: C01B 35/00

(54) **METHOD FOR THE PREPARATION AND PURIFICATION OF BORATE SALTS**
VERFAHREN ZUR HERSTELLUNG UND REINIGUNG VON BORATSALZEN
PROCÉDÉ DE PRÉPARATION ET PURIFICATION DE SELS BORATES

(30) Priority: 08.11.2018 EP 18205162
(43) Date of publication of application: 15.09.2021
(73) Proprietor: EMPA Eidgenössische Materialprüfungs- und Forschungsanstalt, 8600 ZH Dübendorf (CH); Université de Genève, 1211 Genève (CH)
(72) Inventor: DUCHÊNE, Leo, 8050 Zürich (CH); KUEHNEL, Ruben-Simon, 8600 Dübendorf (CH); REMHOF, Arndt, 8600 Dübendorf (CH); BATTAGLIA, Corsin, 8314 Lindau (CH); MOURY, Romain, 53000 Laval (FR); HAGEMANN, Hans, 8847 Egg (CH)
(74) Representative: Kasche & Partner
(86) International application number: PCT/EP2019/080501
(87) International publication number: WO 2020/094773

(56) References cited:
- FR-A1- 2 314 921
- US-A1- 2016 372 786
- Z. B. CURTIS ET AL: "Some by-products of the oxidative coupling of decahydrodecaborate(2-), B10H102-", INORGANIC CHEMISTRY, vol. 13, no. 7, 1 July 1974 (1974-07-01), pages 1760-1763, XP055533238, EASTON, US ISSN: 0020-1669, DOI: 10.1021/ic50137a046
- Yoshida Koji ET AL: "Fast Sodium Ionic Conduction in Na2B10H10-Na2B12H12 Pseudo-Binary Complex Hydride and Application to a Bulk-Type All-Solid-State Battery & Supplementary information", Yoshida, 1 January 2017 (2017-01-01), pages 1-5, XP055648544, Retrieved from the Internet: URL:https://tsapps.nist.gov/publication/ge t_pdf.cfm?pub_id=922421 [retrieved on 2019-12-03]
- WAN SI TANG ET AL: "Stabilizing Superionic-Conducting Structures via Mixed-Anion Solid Solutions of Monocarba- closo -borate Salts", ACS ENERGY LETTERS, vol. 1, no. 4, 2 September 2016 (2016-09-02), pages 659-664, XP055532143, ISSN: 2380-8195, DOI: 10.1021/acsenergylett.6b00310 cited in the application
- CHEN WEIDONG ET AL: "An improved synthesis of unsolvated NaB3H8and its application in preparing Na2B12H12", INTERNATIONAL JOURNAL OF HYDROGEN ENERGY, ELSEVIER SCIENCE PUBLISHERS B.V., BARKING, GB, vol. 41, no. 34, 22 March 2016 (2016-03-22), pages 15471-15476, XP029683868, ISSN: 0360-3199, DOI: 10.1016/J.IJHYDENE.2016.02.143
- L. DUCHÊNE ET AL: "A highly stable sodium solid-state electrolyte based on a dodeca/deca-borate equimolar mixture", CHEMICAL COMMUNICATIONS, vol. 53, no. 30, 1 January 2017 (2017-01-01), pages 4195-4198, XP055534434, ISSN: 1359-7345, DOI: 10.1039/C7CC00794A -& L Duchêne ET AL: "A highly stable sodium solid-state electrolyte based on a dodeca/deca-borate equimolar mixtureElectronic supplementary information (ESI) available: Experimental details and supplementary figures. See DOI: 10.1039/c7cc00794a", J. Appl. Crystallogr, 11 April 2017 (2017-04-11), pages 4195-4198, XP055534395, DOI: 10.1039/c7cc00794a Retrieved from the Internet: URL:www.rsc.org/suppdata/c7/cc/c7cc00794a/ c7cc00794a1.pdf
- KNIZEK J ET AL: "Hydridoborates and hydridoborato metallates - Part 26. Preparation and structures of dihydridoborates of lithium and potassium", JOURNAL OF ORGANOMETALLIC CHEMIS, ELSEVIER-SEQUOIA S.A. LAUSANNE, CH, vol. 614-615, 8 December 2000 (2000-12-08) , pages 168-187, XP004227422, ISSN: 0022-328X, DOI: 10.1016/S0022-328X(00)00688-4
- WILLIAM V. HOUGH ET AL: "THE SODIUM-DIBORANE REACTION", JOURNAL OF THE AMERICAN CHEMICAL SOCIETY, vol. 78, no. 3, 1 February 1956 (1956-02-01), pages 689-689, XP055531965, ISSN: 0002-7863, DOI: 10.1021/ja01584a047
- KANAEVA O A ET AL: "Mixed salts of alkali metal tetrahydro borates with alkali metal closo-boranates", RUSSIAN JOURNAL OF INORGANIC CHEMISTRY, CHEMICAL SOCIETY, LONDON, GB, vol. 35, no. 10, 1 January 1990 (1990-01-01), pages 1421-1422, XP009509981, ISSN: 0036-0236

## Description

The present invention is defined in the appended set of claims. Disclosed is a method for the preparation and/or purification of a salt composition comprising at least two different borate anions, comprising the steps: (a) providing at least two different borate anions; (b) mixing and/or dissolving the anions in a solvent selected from the group consisting of C₂-C₆ alcohols; acetonitrile; ketone-comprising solvents, glymes, organic carbonates, ethers, C₂-C₆ thiols, DMF, DMSO and thioethers; and (c) drying the solution of step (b) to obtain a solid salt composition comprising the at least two different borate anions, optionally in the predetermined molar ratio. The disclosure is also directed to a corresponding use of the method for the manufacture of a salt composition comprising at least two different borate anions, as well as to related products.

Rechargeable lithium and sodium all-solid-state batteries are considered to replace the currently used lithium-ion technology in the mid-term future. A reliable, safe, and inexpensive solid-state conductor with sufficiently high ionic conductivity is the prerequisite for this technology. Currently, several material classes such as polymers, oxides, and sulphides are under investigation. Also, an alternative material class has been developed, the complex hydride class, containing anions such as [B₁₂H₁₂]²⁻, [B₁₀H₁₀]²⁻, [BH₄]⁻, [NH₂]⁻ which provide for a stable 3 V battery with a remarkable capacity retention of 85% after 250 cycles using the electrolyte Na₄(B₁₂H₁₂)-(B₁₀H₁₀) (L. Duchene et al., Chem. Commun., 2017, 53, 4195; L. Duchene et al., Energy Environ. Sci., 2017, 10, 2609). Complex hydride-based electrolytes usually consist of two or more solid precursors, usually salts of borate anions, prepared by mechano-chemial reactions (e.g. by ball milling). These mechano-chemical reactions are associated with considerable drawbacks, such as contamination of the milled material with debris, the need to purify the product from debris and unreacted precursors, and hidden parameters such as the local temperature and pressure during the process, leading to unwanted side products and/or the decomposition of the desired product. Mechano-chemical processes are often time- and ernergy-consuming, related with noise exposure and, compared to wet processes, are more complicated to scale-up for large-scale production.

Complex hydride solid electrolytes such as salts of borate anions are readily soluble in several solvents, including water. However, drying often leads to the formation of salt compositions containing residual solvent molecules, e.g. hydrates if water is used as solvent, that can have inferior properties compared to the solvent-free compositions. In addition, especially if the electrolyte contains two or more anion types, e.g. [B₁₀H₁₀]²⁻ and [B₁₂H₁₂]²⁻, the desired stoichiometry and structure of such an electrolyte can often not be retained after the drying step, i.e. the initial precursors are retained and/or other phases are formed. In the case of [B₁₀H₁₀]²⁻ and [B₁₂H₁₂]²⁻ and water as solvent, *"attempts to form a 1:1 solid solution [...] in this way proved to be unsuccessfull",* while a solid solution of the chemically related systems using [CB₉H₁₀]⁻ and [CB₁₁-H₁₂]⁻ anions formed using water as a solvent were not phase pure (W. S. Tang et al., ACS Energy Lett., 2016, 1, 659). These undesired properties inhibit (i) the direct synthesis of the desired product by wet chemical methods, and (ii) any processing steps that involve solvents such as casting or impregnation.

FR2314921 discloses a process wherein a mixture of (Et₄N)₂B₁₀H₁₀ and (Et₄N)₂B₁₂H₁₂ is (partially) dissolved in methanol and the obtained mixture is fitered and the filtrate is evaporated. The obtained product is recrystallized several times from methanol.

Z.B. Curtis et al. (Inorganic Chemistry, vol. 13, no. 7, 1974, 1760-1763) discloses the effects of temperature, reagent concentration, solvent, acidity and reaction time on the yields of the principal by-products in the oxidation reaction of of B₁₀B₁₀²⁻ with ions other than the primary oxidizing agents.

US2016/372786 discloses a process for making a superionic conducting salt including: combining a primary salt and an impact member, the primary salt including an ordered phase and being an ionic conductor; impacting the primary salt with the impact member; and converting the primary salt to the superionic conducting salt in response to impacting the primary salt with the impact member at a conversion temperature to make the superionic conducting salt, the conversion temperature optionally being less than a thermally activated transition temperature that thermally converts the primary salt to the superionic conducting salt in an absence of the impacting the primary salt, and the superionic conducting salt including a superionic conductive phase in a solid state at less than the thermally activated transition temperature.

Yoshida Koji et al. (Applied Physics Letters 110, 103901, 2017, pages 1-5) discloses the development of highly sodium-ion conductive Na₂B₁₀H₁₀-Na₂B₁₂H₁₂ pseudo-binary complex hydrides via mechanically ball-milling admixtures of the pure Na₂B₁₀H₁₀ and Na₂B₁₂H₁₂ components.

Chen Weidong et al. (International Journal of Hydrogen Energy, vol. 41, no. 34, 2016, pages 15471-15476) discloses a route for the preparation of unsolvated sodium octahydrotriborate with the key step being the disersion of Na in inert media and preparing fresh THF-BH₃ at room temperature.

The problem underlying the present invention is the provision of an alternative and optionally improved method for preparing and/or purifying salt compositions comprising at least two different borate anions, optionally for use in solid-state electrolytes.

The problem is solved by the invention set out in the appended set of claims. Any examples, aspects, embodiments or disclosures which are not reflected in the appended set of claims are not according to the invention and are present for illustration purposes only. Disclosed is a method for the preparation and/or purification of a salt composition comprising at least two different borate anions, the method comprising the steps:
(a) providing at least two different borate anions, optionally in a predetermined molar ratio,
(b) mixing and/or dissolving the anions in a solvent selected from the group consisting of: C₂-C₆ alcohols, optionally ethanol and isopropanol; acetonitrile; ketone-comprising solvents, optionally acetophenone, butanone, cyclopentanone, ethyl isopropyl ketone, 2-hexanone, isophorone, mesityl oxide, methyl isobutyl ketone, methyl isopropyl ketone, 3-methyl-2-pentanone, 2-pentanone and 3-pentanone; glymes, optionally 1-methoxy-2-(2-methoxyethoxy)ethane (diglyme, C₆H₁₄O₃); organic carbonates, optionally ethylene carbonate (EC, CH₂OH)₂) and propylene carbonate (PC, CH₃C₂H₃O₂CO); ethers, optionally tetrahydrofuran (THF, (CH₂)₄O) ; C₂-C₆ thiols, optionally ethanethiol and propanethiol; dimethylformamide (DMF); dimethylsulfoxide (DMSO); and thioethers, optionally C₂-C₆ thioethers, optionally dimethylsulfide;
(c) drying the solution of step (b) to obtain a solid salt composition comprising the at least two different borate anions, optionally in the predetermined molar ratio.

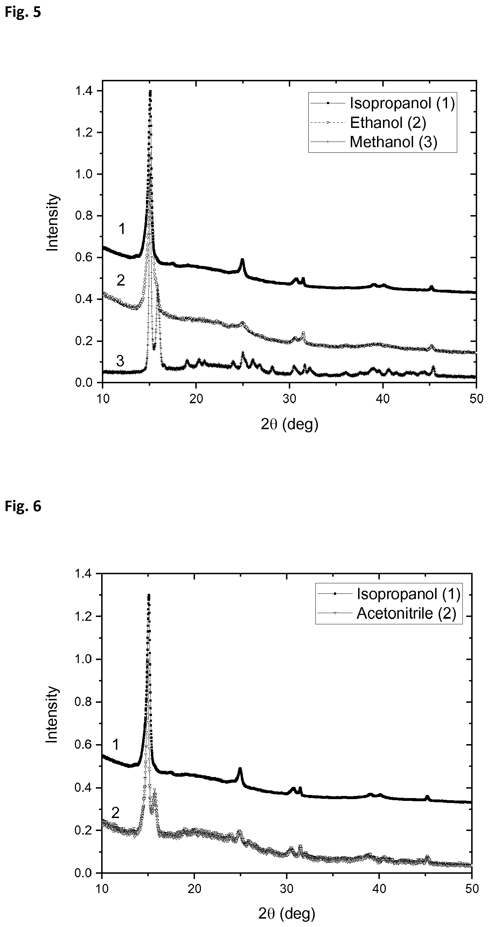

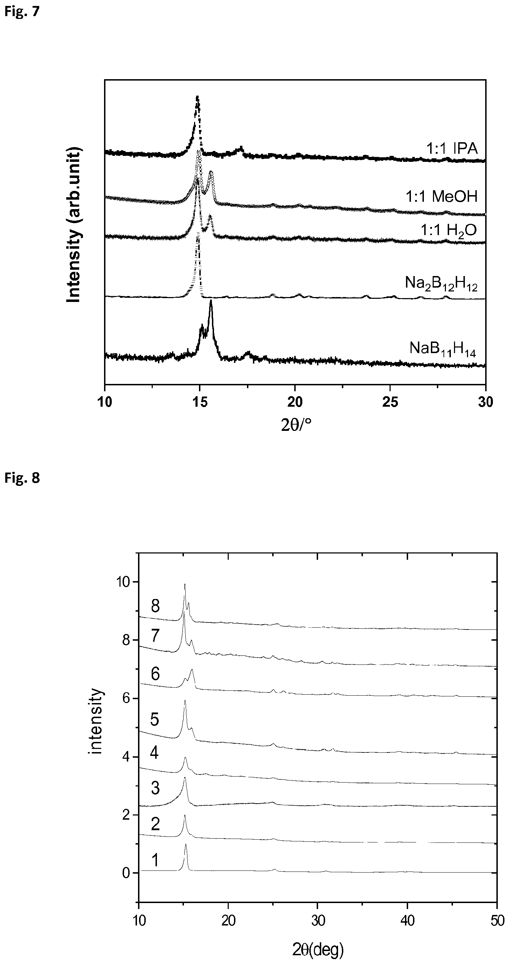

It was surprisingly found that the method of the present invention is capable of producing and/or purifying a salt composition comprising at least two different borate anions (i) with little or without incorporation of solvent molecules in the solid salt composition and (ii) without significant disruption of the individual borate anions within the solid salt composition, formed by the at least two different borate anions, i.e. essentially under retention of the stoichiometric ratio between the two borate anions. Furthermore, the present method can provide pure salt compositions, essentially without impurities, e.g. resulting from mechanical milling and associated debris. Criteria for purity are the presence or absence of any products other than the at least two different borate anions and the phase purity, i.e. the presence of a single phase formed by the at least two different borate anions. Salt compositions prepared by the method of the present invention lead to a single phase, i.e. in a material that is physically and chemically uniform. The purity and the presence of a single phase can be determined, e.g. by standard methods including, e.g., X-ray diffraction which essentially shows a single peak (corresponding to one phase) for the borate salt compositions prepared or purified by the method of the present invention (see, e.g., Figs. 5 and 7).

For example, Na₄(B₁₂H₁₂)(B₁₀H₁₀) can be purified by the method of the present invention without separation of this salt composition into its precursors Na₂B₁₂H₁₂ and Na₂B₁₀H₁₀. The salt composition can be analyzed by methods known in the art, e.g., by X-ray diffraction, ionic conductivity and/or NMR methods as described in the Examples below.

In view of the above, the present method is, e.g., particularly suitable for preparing and/or purifying borate anions for use in solid-state electrolytes.

The method of the present invention is also a method for the production and/or purification of a solid-state electrolyte.

In the context of the present invention, the term "borate anions" is to be understood as any anionic hydride, chloride, fluoride, bromide and/or iodide of boron, in particular BH₄, B₃H₈, B₁₂H₁₂, B₁₀H₁₀ B₁₁H₁₄ and B₁₂Cl₁₂ anions, including the following families of anions: closo-borate, nido-borate, and arachno-borate. Optionally, the term "borate" also encompasses carbaborates such as, e.g., CB₉H₁₂ and CB₉H₁₀ anions. Optionally, the term "borate", as used herein, is directed to anionic hydrides of boron that form clusters.

"Two different borate anions" according to the present invention means that the salt composition provided in step (a) and/or obtained in step (c) of the present method comprises at least two different borate anions, e.g. in the form of Na₄(B₁₂H₁₂)(B₁₀H₁₀). The salt composition may also comprise three or more borate anions in a given molar ratio, of which all are different, or of which only some, e.g. two, differ from each other.

The term "salt composition" as used herein, for example, means a defined combination of borate anions with one or more cations forming a single phase. For example, a salt composition can encompass a binary, ternary or quaternary boron complex or compound.

The borate anions of step (a) of the present invention can be provided in different forms, e.g. as salts with different or the same cations. Also, the borate anions in step (a) can be prepared *in situ* from suitable starting materials by known chemical methods.

In a further embodiment, the method of the present invention is one, wherein in step (c), the solid salt composition is a crystalline salt composition of the at least two different borate anions, and/or a solid-state electrolyte. Optionally, the solid salt composition comprising at least two different borate anions of all embodiments and aspects of the present invention is a crystalline salt composition.

A crystalline salt composition, as used herein, is a salt composition that is not amorphous but that comprises a, e.g. regular and/or ordered, crystalline structure formed by the at least two different borate anions (and the accompanying cations). In other words, the salt composition of all embodiments and aspects of the present invention optionally refers to a composition, wherein the at least two different borate anions (and the accompanying cations) together form the crystal structure of the solid salt composition. Optionally, the salt composition produced and/or purified according to the method of the invention and referred to in any of the embodiments is not a composition wherein the at least two different borate anions form individual salts and/or individual crystal structures.

As used herein and in the context of all embodiments, the term "comprising" optionally also includes that no further components may be present, i.e. includes the term "consisting of".

The chemical synthesis of borate anions is known in the art, for example, (i) R. N. Grimes, "Synthesis and serendipity in boron chemistry: A 50 year perspective", J. Organomet. Chem., vol. 7, p4-15 (2013), (ii) P. Kaszynski "Four Decades of Organic Chemistry of closo-Boranes: A Synthetic Toolbox for Constructing Liquid Crystal Materials. A Review", Collect. Czech. Chem. Commun., vol. 64, p. 895-926 (1999), and (iii) B. R.S. Hansen et al., "Metal boranes: Progress and applications", Coord. Chem. Rev., vol. 323 p. 60-70 (2016) provide an overview of borate anion chemistry.

The C₂-C₆ alcohols for use as solvent in step (b) of the method of the present disclosure can be any organic alcohol comprising from 2 to 6 carbon atoms, such as ethanol, propanol, butanol, pentanol or hexanol, including all corresponding linear (e.g. *n*-), branched (e.g. *sec-, tert-, iso-* and *neo-*) and cyclic (e.g. cyclobutanol, cyclopentanol or cyclohexanol) alcohol species. Also, the C₂-C₆ alcohols for use in the present disclosure can be substituted or non-substituted at one or more carbon atoms, e.g. by halogen(s).

The ketone-comprising solvent for use in the present disclosure can be any solvent that comprises a ketone functionality, e.g. acetophenone, butanone, cyclopentanone, ethyl isopropyl ketone, 2-hexanone, isophorone, mesityl oxide, methyl isobutyl ketone, methyl isopropyl ketone, 3-methyl-2-pentanone, 2-pentanone and 3-pentanone. Also, the ketone-comprising solvent for use in the present disclosure can be substituted or non-substituted at one or more carbon atoms, e.g. by halogen(s).

In step (b) of the present method, the at least two different anions can be fully dissolved in the solvent, or partially dissolved, e.g. if impurities or an excess of anions are present which do not dissolve in the solvent of choice. The mixing step can be implemented by any physical or acoustic mixing means, such as stirring, shaking or sonication, and may be done at room temperature, or, optionally at higher or lower temperatures.

In step (c) of the present method, the solvent is removed by drying the mixture or solution and the molar ratio of the starting material borate anions is optionally retained in the solid salt composition obtained in step (c).

In a further embodiment, in step (a) of the present method, the at least two borate anions form a salt with the same or different cations.

For example, one borate anion can be provided as a sodium salt and the other borate anion can be provided as a potassium salt. Alternatively, both borate anions are associated with the same cation.

In a further embodiment, the at least two different borate anions for use in the present method are selected from the group consisting of:
(i) BₙHₙ²⁻, wherein **n** is an integer from 4 to 12, optionally 10 or 12;
(ii) BₙHₙ₊₃⁻, wherein **n** is an integer from 1 to 11, optionally BH₄⁻ and B₁₁H₁₄⁻;
(iii) BₙHₙ₊₅⁻, wherein **n** is an integer from 3 to 10, optionally B₃H₈⁻;
(iv) BₙH_{(n-y)}X_{y}²⁻, wherein **X** is selected from F, CI, Br and I, **n** is an integer from 4 to 12, and **y** is an integer from 1 to **n**;
(v) CBₙHₙ₊₁⁻, wherein **n** is an integer from 3 to 11, optionally 9 or 11; and
(vi) SnBₙHₙ₊₁⁻, wherein **n** is an integer from 3 to 11, optionally 9 or 11.

In another embodiment, the at least two different borate anions for use in the present method are selected from the group consisting of BH₄, B₃H₈, CB₁₁H₁₂, CB₉H₁₀, B₁₂H₁₂, B₁₀H₁₀, B₁₂Cl₁₂ and B₁₁H₁₄.

In a further embodiment, the at least two different borate anions for use in the present method form a salt with a cation selected from the group consisting of Li, Na, K, Mg, Ca, Al, Zn, Ag, NH₄⁺, HNMe₃⁺, tetrabutylammonium (TBA⁺), and tetraethylammonium (TEA⁺).

In another embodiment, the method of the present method is one, wherein the salt composition comprising at least two different borate anions is
(i) a binary or ternary combination of borate anions,
(ii) a binary combination of borate anions in a ratio of about 1:1,
(iii) a binary combination of B₁₀H₁₀ and B₁₂H₁₂, optionally in a ratio of about 1:1, or
(iv) a binary combination of Na₂B₁₀H₁₀ and Na₂B₁₂H₁₂, optionally in a ratio of about 1:1.

Optionally, the ratio of the borate anions can be from 0.6:1.4 to 1.4:0.6, optionally from 0.8:1.2 to 1.2:0.8, optionally from 0.9:1.1 to 1.1:0.9. Optionally, the ratio of the borate anions can be exactly 1:1, e.g. 1.0:1.0, 1.00:1.00 or 1.000:1.000.

In a further embodiment, the method of the present invention is one, wherein in step (b) the at least two different borate anions in the solvent are sonicated and/or (c) the solution is dried by heating, optionally at temperatures between 40 and 400°C, between 60°C and 200°C, or at about 180 °C, optionally under vacuum, optionally at about 10⁻³ mbar pressure.

In a further embodiment, about 20 mL of solvent, optionally isopropanol, is mixed with about 1 mmol of each of the at least two different borate anions in the method of the present invention.

In another embodiment, the at least two different borate anions or salts thereof for use in the present invention are synthesized, optionally simultaneously synthesized, in or before step (a) of the present method.

In another aspect, the present invention is directed to a use of the method of the present invention for the manufacture of a salt composition comprising at least two different borate anions, optionally of a crystalline salt composition and/or a solid-state electrolyte comprising at least two different borate anions, optionally comprising B₁₂H₁₂²⁻ and B₁₀H₁₀²⁻ anions.

In another embodiment, the use of the present invention is one, wherein the salt composition comprises at least two different borate anions as defined above in the context of the method of the present invention, i.e. wherein the salt composition is
(i) a binary or ternary combination of borate anions,
(ii) a binary combination of borate anions in a ratio of about 1:1,
(iii) a binary combination of B₁₀H₁₀ and B₁₂H₁₂, optionally in a ratio of about 1:1, or
(iv) a binary combination of Na₂B₁₀H₁₀ and Na₂B₁₂H₁₂, optionally in a ratio of about 1:1

In a further embodiment, the use of the present invention is one, wherein the electrolyte or composition is a Na₄[(B₁₂H₁₂)(B₁₀H₁₀)] electrolyte or composition.

In a further aspect, the present disclosure is directed to a product obtainable by the method according to the present invention, wherein the product has a purity of at least 98% per weight, optionally at least 99%, optionally at least 99.5%.

The state of the art methods for preparing salt compositions comprising at least two different borate anions, in particular corresponding solid-state electrolytes, rely on ball milling of the different salts to obtain the salt composition. This physical milling process can lead to impurities, e.g. from abrasion of the milling means, which are undesirable. Hence, (ball) milling is not a suitable process for obtaining high-purity salt compositions. However, the present invention provides means for preparing a salt composition comprising at least two different borate anions that was crystallized from solution, and, thus is significantly purer, i.e. without significant disruption of the constituent anions, without significant residual precursors and forming one phase, compared to salt compositions prepared by state of the art methods.

In a further embodiment, the product obtainable by the method according to the present disclosure is one, wherein the at least two different borate anions are present in about equimolar amounts, optionally wherein the borate anions are B₁₂H₁₂²⁻ and B₁₀H₁₀²⁻. Optionally, the term "equimolar" encompasses ratios of the borate anions from 0.6:1.4 to 1.4:0.6, optionally from 0.8:1.2 to 1.2:0.8, optionally from 0.9:1.1 to 1.1:0.9, optionally exactly 1:1, e.g. 1.0:1.0, 1.00:1.00 or 1.000:1.000.

The invention is set out in the appended set of claims. Any examples, aspects, embodiments or disclosures which are not reflected in the appended set of claims are not according to the invention and are present for illustration purposes only. In the following, the present invention will be illustrated by means of representative examples, none of which should be interpreted as limiting the scope of the invention as defined by the appended claims.

### Figures

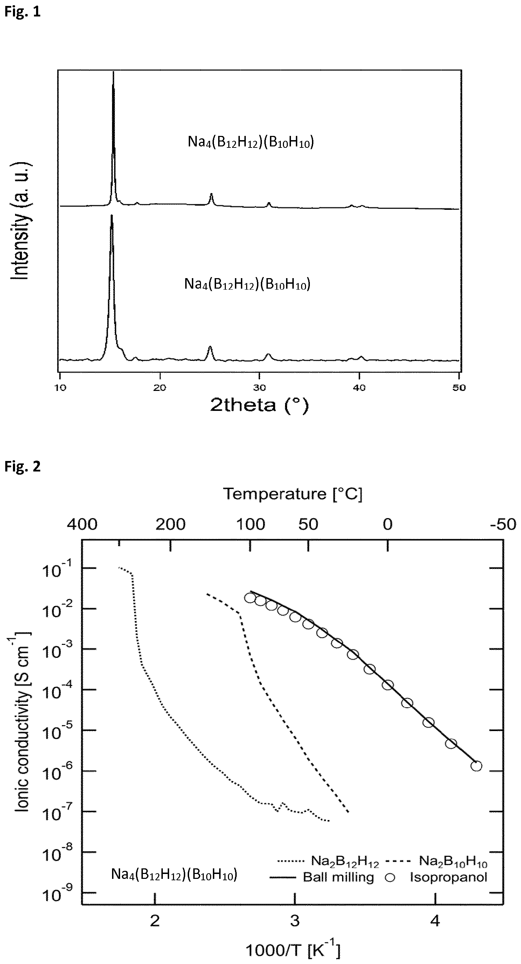

**Fig. 1** shows a comparison of X-ray diffraction patterns of a solid composition of Na₂B₁₀H₁₀ and Na₂B₁₂H₁₂ (1:1) prepared by ball milling (top) and by the method of the present invention using isopropanol as solvent (bottom).
**Fig. 2** shows ionic conductivities of the precursors Na₂B₁₀H₁₀ and Na₂B₁₂H₁₂, of the 1:1 solid composition prepared by ball milling and the ionic conductivity of the 1:1 solid composition prepared by the method of the present invention using isopropanol as solvent. The compositions prepared by ball milling and by the method of the present invention show identical conductivity.

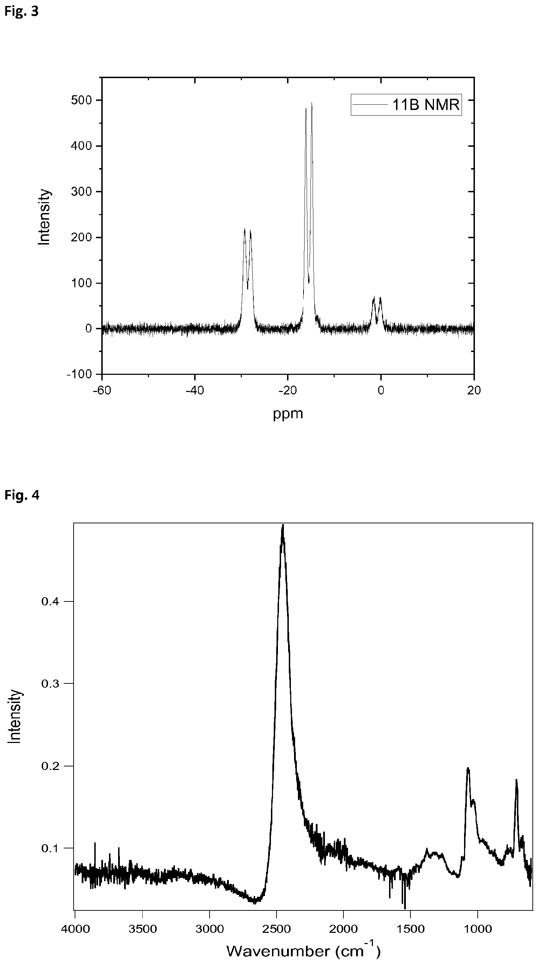

**Fig. 3** shows ¹¹B NMR spectra of a solid composition of Na₂B₁₀H₁₀ and Na₂B₁₂H₁₂ (1:1) prepared by the method of the present invention using isopropanol as solvent. The resonances centered at -30 and -1 ppm originate from the B₁₀H₁₀ anion, the ones centered at -15.6 ppm from the B₁₂H₁₂ anion. No other boron species were detectable and the individual anions are intact within the solid composition.
**Fig. 4** shows FTIR spectra of the solid composition of Na₂B₁₀H₁₀ and Na₂B₁₂H₁₂ (1:1) prepared by the method of the present invention using isopropanol as solvent. No stretching bands of the residual solvent are detected, which indicates that the solvent does not form part of the solid composition.
**Fig. 5** shows X-ray diffraction patterns of a solid composition of Na₂B₁₀H₁₀ and Na₂B₁₂H₁₂ (1:1) after purification by the method of the present invention using the solvents isopropanol, ethanol and methanol. Isopropanol and ethanol gave similarly good results of a pure composition. Methanol on the other hand resulted in the two individual peaks at about 2θ =15 (deg) as seen in the splitting of the leading peak and many more peaks.
**Fig. 6** shows X-ray diffraction patterns of a solid composition of Na₂B₁₀H₁₀ and Na₂B₁₂H₁₂ (1:1) after purification by the method of the present invention using isopropanol (top) and acetonitrile (bottom).
**Fig. 7** shows X-ray diffraction patterns of a solid composition of NaB₁₁H₁₄and Na₂B₁₂H₁₂ (1:1) after purification according to the present method with mixtures from different solvents as indicated (IPA = isopropanol, MeOH = methanol, H₂O = water). The XRD patterns of the precursors are shown for comparison.
**Fig. 8** shows X-ray diffraction patterns of a solid composition of Na₂B₁₀H₁₀ and Na₂B₁₂H₁₂ (1:1) after purification by the method of the present invention using isopropanol (1), 2-butanone (2), 2-butanol (3), tetrahydrofuran (4), dimethoxyethane (5), dioxane (6), acetone (7), and 1-propanol (8).

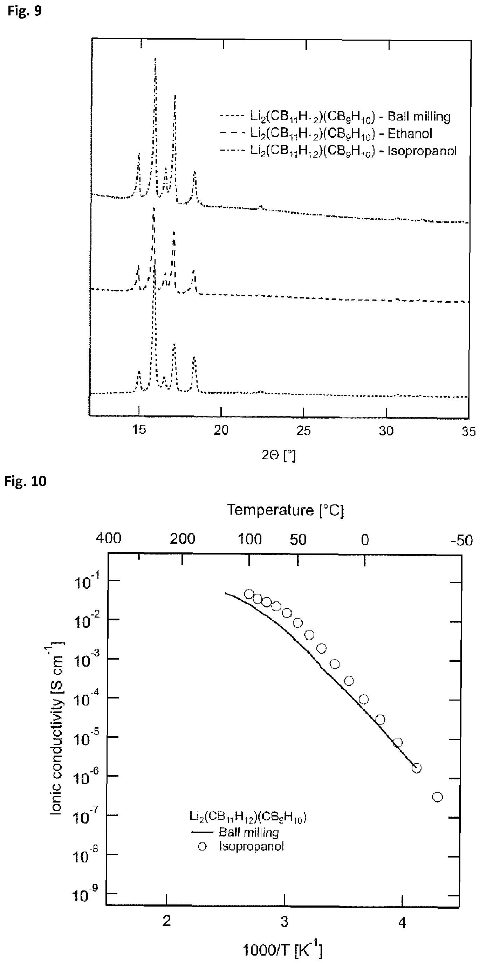

**Fig. 9** shows a comparison of X-ray diffraction patterns of a solid composition of LiCB₉H₁₀ and LiCB₁₁H₁₂ (1:1) prepared by ball milling (top) and by the method of the present invention using ethanol (middle) and isopropanol (top) as solvents.
**Fig. 10** shows ionic conductivities of a solid composition of LiCB₉H₁₀ and LiCB₁₁H₁₂ (1:1) prepared by ball milling (solid line) and the ionic conductivity of the 1:1 solid composition of LiCB₉H₁₀ and LiCB₁₁H₁₂ prepared by the method of the present invention using isopropanol as solvent (dots). The composition prepared by the method of the present invention shows a higher ionic conductivity as compared to the literature data on the ball milled compound.

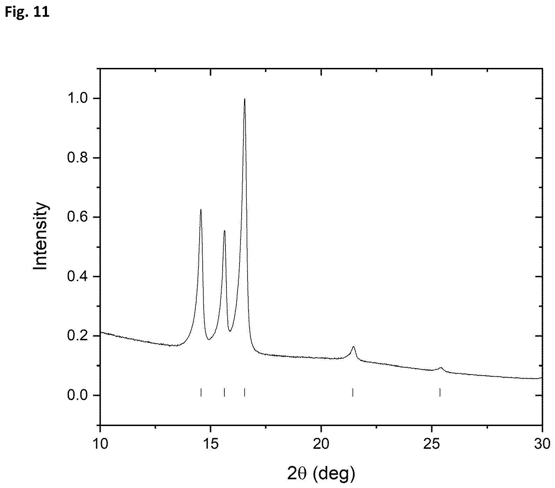

**Fig. 11** shows a comparison of the X-ray diffraction pattern of a solid composition of NaCB₉H₁₀ and NaCB₁₁H₁₂ (1:1) prepared by the method of the present invention using isopropanol as solvent (top) and the peak positions of the reference compound prepared by ball milling (ticks). The reference data are taken from Tang et al, ACS Energy Lett. 1 659 (2016).

### Examples

### Example 1: Preparation and purification of Na₄(B₁₂H₁₂)(B₁₀H₁₀)

1 mmol Na₂B₁₂H₁₂ and 1 mmol Na₂B₁₀H₁₀ were mixed in 20 mL isopropanol. The solution was sonicated for about 3-5 minutes to ensure solution of the salts and to make a homogeneous solution. The solution was then dried on a rotary evaporator (water bath temperature 60 °C, pressure 140 mbar) for about 5 h and further dried on the Schlenk line until 10⁻³ mbar pressure was reached. Finally, the dry powder was placed in a vacuum oven at 180 °C for 4 h to crystalize the final phase. The desired product was a 1:1 solid composition of Na₄(B₁₂H₁₂)(B₁₀H₁₀) which was verified by X-ray diffraction analysis (see Fig. 1), ionic conductivity (see Fig. 2) and NMR analysis (see Fig. 3) and FTIR analysis (see Fig. 4). The same procedure was repeated with ethanol and methanol as solvents.

### Example 2: Comparison of solvents for the purification of Na₄(B₁₂H₁₂)(B₁₀H₁₀)

The procedure of Example 1 was repeated with the solvents isopropanol, ethanol, acetonitrile, methanol, 2-butanol, 2-butanone, tetrahydrofuran (THF), dimethoxyethane, dioxane, acetone, and 1-propanol in separate experiments under the same conditions. As demonstrated in Figs. 5, 6, and 8, isopropanol, acetonitrile, ethanol, 2-butanol, 2-butanone, and THF gave similar results. Methanol, 1-propanol, acetone, dioxane, and dimethoxyethane on the other hand resulted in the two individual peaks as seen in the splitting of the leading peak and many more peaks (see Figs.5 and 8).

### Example 3: Direct synthesis of Na₄(B₁₂H₁₂)(B₁₀H₁₀)

Tetraethylammonium borohydride (TEABH₄) is reacted in an autoclave at 70 °C with dichloromethane to yield tetraethylammonium octahydrotriborate (TEAB₃H₈). This compound is then reacted in an autoclave with toluene at 185 °C to yield an equimolar mixture of (TEA)₂B₁₀H₁₀ and (TEA)₂B₁₂H₁₂. After conversion to the sodium salts with sodium tetraphenylborate in water, the dried *closo* hydroborate mixture is recrystallized with isopropanol as described above to yield the desired compound Na₄(B₁₂H₁₂)(B₁₀H₁₀). For further details see: A. Gigante, L. Duchêne, R. Moury, M. Pupier, A. Remhof, and H. Hagemann, ChemSusChem 2019, in press doi: 10.1002/cssc.201902152.

### Example 4: Preparation and purification of Li₂(CB₁₁H₁₂)(CB₉H₁₀)

The procedure of Example 6 was repeated for the equimolar mixture LiCB₁₁H₁₂ and LiCB₉H₁₀ with the solvents isopropanol and ethanol. As demonstrated in Fig. 9 for the solvents isopropanol and ethanol, the product was the desired 1:1 solid composition of Li₂(CB₁₁H₁₂)(CB₉H₁₀), verified by X-ray diffraction (Fig. 9) analysis and ionic conductivity measurements (Fig. 10) compared to the conventionally (ball milled) synthesis described in literature.

### Example 5: Preparation and purification of Na₂(CB₁₁H₁₂)(CB₉H₁₀)

The procedure of Example 6 was repeated for the equimolar mixture NaCB₁₁H₁₂ and NaCB₉H₁₀ with the solvent isopropanol. As demonstrated in Fig. 11, the product was the desired 1:1 solid composition of Na₂(CB₁₁H₁₂)(CB₉H₁₀), verified by X-ray diffraction analysis and comparison to the mixed system described in literature (Tang et al, ACS Energy Lett. 2016 1 659).

### Example 6: Preparation and purification of Na₃(B₁₂H₁₂)(B₁₁H₁₄)

300 mg of Na₂B₁₂H₁₂ (0.87 mmol) and NaB₁₁H₁₄ (0.87 mmol) were mixed in 20mL isopropanol. The solution was sonicated for about 5-10 minutes to ensure complete solution of the salts and to make a homogeneous solution. The solution was then dried on a rotary evaporator (water bath temperature 80 °C, pressure 200 mbar) for about 1 h and further dried on the Schlenk line until 10⁻³ mbar pressure was reached. Finally, the dry powder was placed in a vacuum oven at 110 °C for 2 h to crystalize the final phase. Using isopropanol (IPA) as a solvent, a solid composition was achieved with a distinct crystal structure from the precursors as seen from X-ray diffraction (see Fig. 6). NMR data confirmed that the respective anions (B₁₁H₁₄⁻ and B₁₂H₁₂²⁻) were intact; no other boron species were detected. Using methanol and water as solvents lead to mixtures of the two initial phases, not to a new phase (see Fig. 7).

## Claims

1. A method for the preparation and/or purification of a salt composition comprising at least two different borate anions, the method comprising the steps:
(a) providing at least two different borate anions, optionally in a predetermined molar ratio,
(b) dissolving or mixing and dissolving the anions in isopropanol;
(c) drying the solution of step (b) to obtain a solid salt composition comprising the at least two different borate anions, optionally in the predetermined molar ratio,
wherein the at least two different borate anions are selected from the group consisting of:
(i) BₙHₙ²⁻, wherein **n** is an integer from 4 to 12, optionally 10 or 12;
(ii) BₙHₙ₊₃⁻, wherein **n** is an integer from 1 to 11, optionally BH₄⁻ and B₁₁H₁₄⁻;
(iii) BₙHₙ₊₅⁻, wherein **n** is an integer from 3 to 10, optionally B₃H₈⁻;
(iv) BₙH_{(n-y)}X_{y}²⁻, wherein **X** is selected from F, CI, Br and I, **n** is an integer from 4 to 12, and **y** is an integer from 1 to **n**;
(v) CBₙHₙ₊₁⁻, wherein **n** is an integer from 3 to 11, optionally 9 or 11; and
(vi) SnBₙHₙ₊₁⁻, wherein **n** is an integer from 3 to 11, optionally 9 or 11.

2. The method according to claim 1, wherein in step (c), the solid salt composition is a crystalline salt composition of the at least two different borate anions, and/or a solid-state electrolyte.

3. The method according to claim 1 or 2, wherein in step (a), the at least two borate anions form a salt with the same or different cations.

4. The method according to any of claims 1 to 3, wherein the at least two different borate anions are selected from the group consisting of: BH₄, B₃H₈, CB₁₁H₁₂, CB₉H₁₀, B₁₂H₁₂, B₁₀H₁₀, B₁₂Cl₁₂ and B₁₁H₁₄.

5. The method according to any of claims 1 to 4, wherein the at least two different borate anions form a salt with a cation selected from the group consisting of Li, Na, K, Mg, Ca, Al, Zn, Ag, NH₄⁺, HNMe₃⁺, tetrabutylammonium and tetraethylammonium.

6. The method according to any of claims 1 to 5, wherein the salt composition comprising at least two different borate anions is
(i) a binary or ternary combination of borate anions,
(ii) a binary combination of borate anions in a ratio of about 1:1,
(iii) a binary combination of B₁₀H₁₀ and B₁₂H₁₂, optionally in a ratio of about 1:1, or
(iv) a binary combination of Na₂B₁₀H₁₀ and Na₂B₁₂H₁₂, optionally in a ratio of about 1:1.

7. The method according to any of claims 1 to 6, wherein in step (b) the at least two different borate anions in the solvent are sonicated and/or (c) the solution is dried by heating, optionally at temperatures between 40 and 400°C, between 60°C and 200°C, or at about 180°C, optionally under vacuum, optionally at about 10⁻³ mbar pressure.

8. The method according to any of claims 1 to 7, wherein about 20 mL of isopropanol is mixed with about 1 mmol of each of the at least two different borate anions.

9. The method according to any of claims 1 to 8, wherein the at least two different borate anions or salts thereof are synthesized, optionally simultaneously synthesized, in step (a).

10. A use of the method according to any of claims 1 to 9 for the manufacture of a salt composition comprising at least two different borate anions, optionally of a crystalline salt composition and/or a solid-state electrolyte comprising at least two different borate anions, optionally comprising B₁₂H₁₂²⁻ and B₁₀H₁₀²⁻ anions.

11. The use according to claim 10, wherein the salt composition comprises at least two different borate anions as defined in claim 5.

12. The use according to claim 10 or 11, wherein the electrolyte or composition is a Na₄[(B₁₂H₁₂)(B₁₀H₁₀)] electrolyte or composition.

## Patentansprüche

1. Ein Verfahren für die Herstellung und/oder Aufreinigung einer Salzzusammensetzung die wenigstens zwei verschiedene Boratanionen umfasst, wobei das Verfahren die folgenden Schritte umfasst:
(a) Bereitstellen von wenigstens zwei verschiedenen Boratanionen, optional in einem vorbestimmten Molverhältnis,
(b) Auflösen oder Mischen und Auflösen der Anionen in Isopropanol;
(c) Trocknen der Lösung von Schritt (b), um eine feste Salzzusammensetzung zu gewinnen, die wenigstens die zwei verschiedenen Boratanionen umfasst, optional in dem vorbestimmten Molverhältnis,
(d) wobei die wenigstens zwei verschiedenen Boratanionen aus der Gruppe ausgewählt sind, bestehend aus:
(i) BₙHₙ²⁻, wobei **n** eine ganze Zahl von 4 bis 12, optional 10 oder 12 ist;
(ii) BₙHₙ₊₃⁻, wobei **n** eine ganze Zahl von 1 bis 11, optional BH₄⁻ and B₁₁H₁₄⁻ ist;
(iii) BₙHₙ₊₅⁻, wobei **n** eine ganze Zahl von 3 bis 10, optional B₃H₈⁻ ist;
(iv) BₙH_{(n-y)}X_{y}²⁻, wobei **X** aus F, Cl, Br und I ausgewählt ist, **n** eine ganze Zahl von 4 bis 12 ist, und **y** eine ganze Zahl von 1 bis **n** ist;
(v) CBₙHₙ₊₁⁻, wobei **n** eine ganze Zahl von 3 bis 11, optional 9 oder 11 ist; und
(vi) SnBₙHₙ₊₁⁻, wobei **n** eine ganze Zahl von 3 bis 11, optional 9 oder 11 ist.

2. Das Verfahren gemäss Anspruch 1, wobei in Schritt (c) die feste Salzzusammensetzung eine kristalline Salzzusammensetzung aus den wenigstens zwei verschiedenen Borationen und/oder ein Festkörperelektrolyt ist.

3. Das Verfahren gemäss Anspruch 1 oder 2, wobei in Schritt (a) die wenigstens zwei Boratanionen ein Salz mit den gleichen oder verschiedenen Kationen bilden.

4. Das Verfahren gemäss einem der Ansprüche 1 bis 3, wobei die wenigstens zwei verschiedenen Borationen aus der Gruppe ausgewählt sind, bestehend aus : BH₄, B₃H₈, CB₁₁H₁₂, CB₉H₁₀, B₁₂H₁₂, B₁₀H₁₀, B₁₂Cl₁₂ und B₁₁H₁₄.

5. Das Verfahren gemäss einem der Ansprüche 1 bis 4, wobei die wenigstens zwei verschiedenen Boratanionen ein Salz mit einem Kation bilden, dass aus der Gruppe ausgewählt ist, bestehend aus Li, Na, K, Mg, Ca, Al, Zn, Ag, NH₄⁺, HNMe₃⁺, Tetrabutylammonium und Tetraethylammonium.

6. Das Verfahren gemäss einem der Ansprüche 1 bis 5, wobei die wenigstens zwei verschiedene Boratanionen umfassende Salzzusammensetzung
(i) eine binäre oder ternäre Kombination von Boratanionen ist,
(ii) eine binäre Kombination von Boratanionen in einem Verhältnis von etwa 1:1 ist,
(iii) eine binäre Kombination von B₁₀H₁₀ und B₁₂H₁₂, optional in einem Verhältnis von etwa 1:1 ist, oder
(iv) eine binäre Kombination von Na₂B₁₀H₁₀ und Na₂B₁₂H₁₂ in einem Verhältnis von etwa 1:1 ist.

7. Das Verfahren gemäss einem der Ansprüche 1 bis 6, wobei in Schritt (b) die wenigstens zwei verschiedenen Boratanionen in dem Lösungsmittel einer Ultraschallbehandlung unterzogen werden, und/oder (c) die Lösung durch Erhitzen, optional bei Temperaturen zwischen 40 und 400°C, zwischen 60°C und 200°C, oder bei etwa 180°C, optional unter Vakuum, optional bei etwa 10⁻³ mbar Druck getrocknet wird.

8. Das Verfahren gemäss einem der Ansprüche 1 bis 7, wobei etwa 20 ml Isopropanol mit etwa 1 mmol von jedem der wenigstens zwei verschiedenen Boratanionen vermischt werden.

9. Das Verfahren gemäss einem der Ansprüche 1 bis 8, wobei die wenigstens zwei verschiedenen Boratanionen oder Salze davon synthetisiert, optional gleichzeitig in Schritt (a) synthetisiert werden.

10. Eine Verwendung des Verfahrens gemäss einem der Ansprüche 1 bis 9 für die Herstellung einer Salzzusammensetzung umfassend wenigstens zwei verschiedene Boratanionen, optional einer kristallinen Salzzusammensetzung und/oder eines Festkörperelektrolyten, die bzw. der wenigstens zwei verschiedene Boratanionen umfasst, optional B₁₂H₁₂²⁻ und B₁₀H₁₀²⁻ Anionen umfasst.

11. Die Verwendung gemäss Anspruch 10, wobei die Salzzusammensetzung wenigstens zwei verschiedene Boratanionen wie in Anspruch 5 definiert umfasst.

12. Die Verwendung gemäss Anspruch 10 oder 11, wobei der Elektrolyt oder die Zusammensetzung ein Elektrolyt oder eine Zusammensetzung mit Na₄[(B₁₂H₁₂)(B₁₀H₁₀)] ist.

## Revendications

1. Procédé pour la préparation et/ou la purification d'une composition saline comprenant au moins deux anions borates différents, le procédé comprenant les étapes de :
(a) fourniture d'au moins deux anions borates différents, optionnellement dans un rapport molaire prédéterminé ;
(b) dissolution ou mélange et dissolution des anions dans de l'isopropanol ;
(c) séchage de la solution de l'étape (b) pour obtenir une composition saline solide comprenant les au moins deux anions borates différents, optionnellement dans le rapport molaire prédéterminé,
dans lequel les au moins deux anions borates différents sont choisis dans le groupe constitué de :
(i) BₙHₙ²⁻, où n est un nombre entier de 4 à 12, optionnellement 10 ou 12 ;
(ii) BₙHₙ₊₃⁻, où n est un nombre entier de 1 à 11, optionnellement BH₄⁻ et B₁₁H₁₄⁻ ;
(iii) BₙHₙ₊₅⁻, où n est un nombre entier de 3 à 10, optionnellement B₃H₈⁻ ;
(iv) BₙH_{(n-y)}X_{y}²⁻, où X est choisi parmi F, Cl, Br et I, n est un nombre entier de 4 à 12 et y est un nombre entier de 1 à n ;
(v) CBₙHₙ₊₁⁻, où n est un nombre entier de 3 à 11, optionnellement 9 ou 11 ; et
(vi) SnBₙHₙ₊₁⁻, où n est un nombre entier de 3 à 11, optionnellement 9 ou 11.

2. Procédé selon la revendication 1, dans lequel dans l'étape (c), la composition saline solide est une composition saline cristalline des au moins deux anions borates différents et/ou un électrolyte à l'état solide.

3. Procédé selon la revendication 1 ou 2, dans lequel dans l'étape (a), les au moins deux anions borates forment un sel avec des cations identiques ou différents.

4. Procédé selon l'une quelconque des revendications 1 à 3, dans lequel les au moins deux anions borates différents sont choisis dans le groupe constitué de : BH₄, B₃H₈, CB₁₁H₁₂, CB₉H₁₀, B₁₂H₁₂, B₁₀H₁₀, B₁₂Cl₁₂ et B₁₁H₁₄.

5. Procédé selon l'une quelconque des revendications 1 à 4, dans lequel les au moins deux anions borates différents forment un sel avec un cation choisi dans le groupe constitué de Li, Na, K, Mg, Ca, Al, Zn, Ag, NH₄⁺, HNMe₃⁺, tétrabutylammonium et tétraéthylammonium.

6. Procédé selon l'une quelconque des revendications 1 à 5, dans lequel la composition saline comprenant au moins deux anions borates différents est :
(i) une combinaison binaire ou ternaire d'anions borates,
(ii) une combinaison binaire d'anions borates dans un rapport d'environ 1:1,
(iii) une combinaison binaire de B₁₀H₁₀ et B₁₂H₁₂, optionnellement dans un rapport d'environ 1:1, ou
(iv) une combinaison binaire de Na₂B₁₀H₁₀ et Na₂B₁₂H₁₂, optionnellement dans un rapport d'environ 1:1.

7. Procédé selon l'une quelconque des revendications 1 à 6, dans lequel dans l'étape (b), les au moins deux anions borates différents dans le solvant sont soumis aux ultrasons et/ou (c), la solution est séchée par un chauffage, optionnellement à des températures entre 40 et 400 °C, entre 60 °C et 200 °C ou à environ 180 °C, optionnellement sous vide, optionnellement à une pression d'environ 10⁻³ mbar.

8. Procédé selon l'une quelconque des revendications 1 à 7, dans lequel environ 20 ml d'isopropanol sont mélangés avec environ 1 mmol de chacun des au moins deux anions borates différents.

9. Procédé selon l'une quelconque des revendications 1 à 8, dans lequel les au moins deux anions borates différents ou des sels de ceux-ci sont synthétisés, optionnellement synthétisés simultanément, dans l'étape (a).

10. Utilisation du procédé selon l'une quelconque des revendications 1 à 9 pour la fabrication d'une composition saline comprenant au moins deux anions borates différents, optionnellement d'une composition saline cristalline et/ou d'un électrolyte à l'état solide comprenant au moins deux anions borates différents, optionnellement comprenant les anions B₁₂H₁₂²⁻ et B₁₀H₁₀²⁻.

11. Utilisation selon la revendication 10, dans laquelle la composition saline comprend au moins deux anions borates différents tels que définis dans la revendication 5.

12. Utilisation selon la revendication 10 ou 11, dans laquelle l'électrolyte ou la composition est un électrolyte ou une composition de Na₄[(B₁₂H₁₂)(B₁₀H₁₀)].
